# EUROPEAN PATENT APPLICATION

(11) **EP 2 432 220 A2**
(43) Date of publication of application: **21.03.2012**
(21) Application number: 11161846.8
(22) Date of filing: 11.04.2011
(51) Int. Cl.: H04N 5/76

(54) **Stream file management apparatus and a method of the same**

(30) Priority: 17.09.2010 JP 2010210137
(71) Applicant: Kabushiki Kaisha Toshiba, Tokyo 105-8001 (JP)
(72) Inventor: Mori, Takahisa, Tokyo 105-8001 (JP)
(74) Representative: HOFFMANN EITLE

(57) **Abstract**

According to one embodiment, a stream file/identification information producer (35a1) receives packets including a program content and packets including additional information, produces a stream file assembled the packets and identification information with the additional information used for a menu to specify the stream file. A recording controller (35a) outputs the stream file and the identification information to a recording medium. A reproducing controller (35b) processes the stream file and the identification information read from the recording medium. An editor (35c) generates new identification information from the additional information included in the packet of the read stream file, when the read identification information is irregular and different from a predetermined order. A display controller (35d) obtains an output for the menu by using the identification information.

## Description

Embodiments described herein relate generally to a stream file management apparatus and a method of the same.

Generally, video recording and reproduction apparatuses, television apparatuses and personal computers equipped with a video recording function have a function of storing moving image data as content file, when moving image data is captured. In addition, they also have a file managing function for managing the stored content files.

Management information prepared by the file managing function includes a file number or a file name of the content file, and the stored content file is associated with its management information by the file number or the file name thereof. For example, in personal computers, the user inputs a unique file name for a content file.

As an element which associates a content file with its management information, there is a file name which is uniquely assigned to the content file. However, there are apparatuses which prepare metadata as more detailed information and add the metadata to the management information. In addition, there are also apparatuses which generate metadata concerning content and add the metadata to a part of image frames of the content.

A general architecture that implements the various features of the embodiments will now be described with reference to the drawings. The drawings and the associated descriptions are provided to illustrate the embodiments and not to limit the scope of the invention.
FIG. 1 is a block diagram illustrating an example of an exemplary structure of an apparatus of an embodiment.
FIG. 2 is an explanatory diagram of exemplary information recorded in a hard disk of FIG. 1.
FIG. 3A and FIG. 3B are diagrams illustrating an example of an exemplary recording list displayed on a display device by the apparatus of the embodiment of FIG. 1.
FIG. 4A and FIG. 4B are diagrams illustrating another example of an exemplary recording list displayed on a display device by the apparatus of the embodiment of FIG. 1.
FIG. 5 is an exemplary flowchart of an example of operation performed when a program is recorded by the apparatus of the embodiment of FIG. 1.
FIG. 6 is an exemplary flowchart of an example of operation performed when a program is reproduced by the apparatus of the embodiment of FIG. 1.
FIG. 7 is an exemplary flowchart of another example of operation performed when a program is reproduced by the apparatus of the embodiment of FIG. 1.

The present disclosure provides a stream file management apparatus and a method of the same as follows: a plurality of stream files which are recorded on a recording medium can be easily distinguished from each other by display of a recording list. In addition, additional information included in a stream is used as identification information of the stream, and the identification information is stored in a recording list file which is independent of the stream file. In addition, when identification information cannot be obtained due to any cause when the stream is stored in the stream file, new identification information is automatically prepared from additional information of the corresponding stream.

Note the recording list may be referred to as a recording stream list, or a recorded program list. The identification information may be referred to as program information or metadata.

Various embodiments will be described hereinafter with reference to the accompanying drawings.

In general, according to one embodiment, a stream file/identification information producer is configured to receive packets including a program content and packets including additional information, produce a stream file assembled the packets and identification information with the additional information used for a menu to specify the stream file. A recording controller is configured to output the stream file and the identification information to a recording medium. A reproducing controller is configured to read the stream file and the identification information from the recording medium. A recording list editor is configured to generate new identification information from the additional information included in the packet of the stream file, when the identification information is irregular and different from a predetermined order. A display controller is configured to obtain an output for the menu by reproducing the identification information.

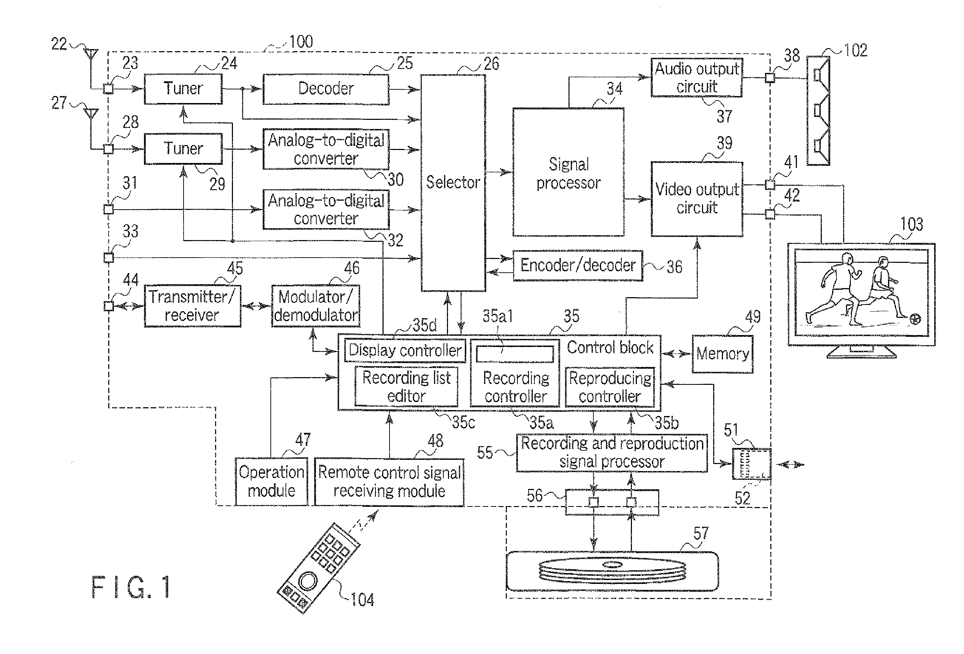

FIG. 1 schematically illustrates a signal processing system of a television broadcasting receiver 100, which is an example of an apparatus of an embodiment. A digital television broadcasting signal which is received by a digital television broadcasting receiving antenna 22 is supplied to a tuner 24 through an input terminal 23. The tuner 24 selects and demodulates a signal of a desired channel from the input digital television broadcasting signal. The signal output from the tuner 24 is supplied to a decoder 25, subjected to decoding by, for example, a Moving Picture Experts Group (MPEG) 2 system, and then supplied to a selector 26.

The output of the tuner 24 is also directly supplied to the selector 26. Image information and sound information are separated from the signal. The image information and the sound information are processed by a recording and reproduction signal processor 55 through a controller 35, and may be recorded on a hard disk by a hard disk drive (HDD) 57. The HDD 57 is connected as unit to the recording and reproduction signal processor 55 through a terminal 56, and may be exchanged. The HDD 57 includes a signal recorder and a signal reader.

An analog television signal which is received by an analog television broadcasting receiving antenna 27 is supplied to a tuner 29 through an input terminal 28. The tuner 29 can select and demodulate a signal of a desired channel from the input analog television broadcasting signal. The signal output from the tuner 29 is digitized by an analog-to-digital converter 30, and thereafter output to the selector 26.

In addition, analog image and sound signals that are supplied to an analog signal input terminal 31, to which a device such as a VTR is connected, are supplied to an analog-to-digital converter 32 and digitized, and then output to the selector 26. Digital image and sound signals that are supplied to a digital signal input terminal 33, to which a device such as an optical disk reproduction device is connected, are supplied to the selector 26 without any processing.

When an digitized signal is recorded on the HDD 57, the digitized signal is subjected to compression processing by a predetermined format, for example, Moving Picture Experts Group (MPEG) 2, by an encoder in an encoder/decoder 36 accompanying the selector 26. The compressed signal is recorded on the HDD 57 through the recording and reproduction signal processor 55. The recording and reproduction signal processor 55 records information on the HDD 57 in cooperation with a recording controller 35a.

In this case, the recording and reproduction signal processor 55 is programmed in advance as to what information is recorded in what directory of the HDD 57. Therefore, conditions for storing a stream file in a stream directory and conditions for storing identification information in a recording list file are set in the recording and reproduction signal processor 55.

The selector 26 selects an input digital image signal and a sound signal from the input digital image signals and sound signals of the four systems, and supplies the signals to a signal processor 34. The signal processor 34 separates audio information and video information from the input digital image signal, and subjects them to predetermined signal processing. As signal processing, audio decoding, sound quality control, and mixing processing are performed for the audio information. Color and luminance separation processing, color control processing, and image quality control processing are performed for the video information.

The audio information is changed to analog signal by an audio output circuit 37, subjected to control of sound volume and channel balance, and then output to a speaker device 102 through an output terminal 38.

The video information is subjected to pixel combining processing and scanning line number conversion in a video output circuit 39, and then output to a display device 103 through output terminals 41 and 42. When the image signal is a 3D signal, both the output terminals 41 and 42 may be used, but the configuration is not limited in this embodiment.

As the image display device 103, for example, a flat panel display formed of a liquid crystal display and a plasma display is adopted.

Various operations including various receiving operations of the television broadcasting receiving apparatus 100 are comprehensively controlled by a control block 35. The control block 35 is a group of microprocessors which includes a central processing unit (CPU) and the like. The control block 35 obtains operation information from an operation module 47, or operation information transmitted from a remote controller 104. The operation information from the remote controller 104 is input to the control block 35 through a remote control signal receiver 48. The control block 35 control blocks to reflect the operations.

The control block 35 uses a memory 49. The memory 49 mainly includes a read-only memory (ROM) which stores control programs to be executed by a CPU thereof, a random access memory (RAM) which provides the CPU with a work area, and a nonvolatile memory which stores various setting information items and control information.

The apparatus can also communicate with an external server through the Internet. A downstream signal from a connection terminal 44 is demodulated by a transmitter/receiver 45, demodulated by a modulator/demodulator 46, and input to the control block 35. In addition, an upstream signal is modulated by the modulator/demodulator 46, converted into the transmitter/receiver 45, and output to the connection terminal 44.

The control block 35 can convert moving images or service information downloaded from an external server, and supply it to the video output circuit 39. In addition, the control block 35 also can transmit a service request signal to an external server, in response to an operation of the remote controller.

The control block 35 can also read data of a card type memory 52 which is attached to a connector 51. Therefore, the apparatus can capture photograph image data from, for example, the card type memory 52, and display the images on the display device 103. In addition, when special color control is performed, it is possible to use image data from the card type memory 52 as standard data or reference data.

In the above apparatus, the user can control the tuner 24 through operation of the remote controller 104, perform program selection, and view a desired program of the digital television broadcasting signal. In addition, when the user wishes to store a desired program on the HDD 57, the user can start the recording and reproduction signal processor 55 by operating the remote controller 104, and achieve the object.

The output of the tuner 24 is decoded by the decoder 25 into a baseband image signal, and the baseband image signal is input to the signal processor 24 from the selector 26. Thereby, the user can view a desired program on the display device 103.

In addition, a stream (formed of a number of packets) of the selected program is input to the control block 35 through the selector 26. When the user performs recording operation, the recording controller 35a selects the stream of the program, and supplies the stream to the recording and reproduction signal processor 55. By operation of the recording controller 35a and the recording and reproduction signal processor 55, for example, a file number is assigned to the stream of the program, and the stream is stored in a file directory of the HDD 57 as a stream file.

In addition, when the user wishes to reproduce and view a stream file recorded on the HDD 57, the user can designate display of, for example, a recording list file by operating, for example, the remote controller 104 (the recording list file will be explained later in detail).

The recording list file includes a table of file numbers and file names (hereinafter referred to as identification information), which indicates what stream files are recorded on the HDD 57. When the user instructs the apparatus to display a recording list file, the recording list is displayed as menu. The user moves a cursor to a position of a desired program name or file number among the displayed list, and operates the OK button. Thereby, reproduction of the desired stream file is started.

The designated stream file is read out of the HDD 57 under the control of the reproduction controller 35b, decoded by the recording and reproduction signal processor 55, and input to the signal processor 34 through the control block 35 and the selector 26.

The control block 35 includes the recording controller 35a, the reproduction controller 35b, and a recording list editor 35c. These constituent elements have the following important functions. The control block 35 also includes a display controller 35d, and controls a display state of a recording list and a monitor window picture as described later.

A first packet which includes content of a selected program, and second and third packets which include additional information are input to the recording controller 35a. The recording controller 35a can produce a first stream file obtained by collecting the first and third packets, and produce first identification information (also referred to as "metadata") to identify the first stream file from the additional information of the second packet. Specifically, the recording controller 35a includes a stream file and identification information producer 35a1, which produces stream files and identification information. The recording controller 35a is also configured to output the stream file and the identification information to a recording medium which is the HDD 57.

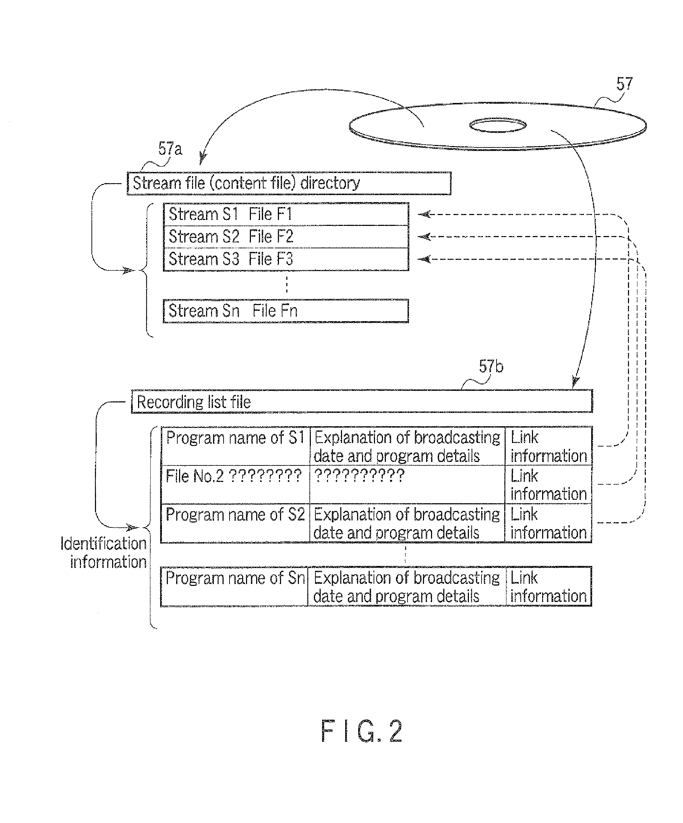

On the other hand, in the HDD 57, the first stream file is stored and managed in a stream file directory together with other stream files, as illustrated in FIG. 2. The first identification information is stored and managed in a recording list file together with other identification items.

The reproduction controller 35b can reproduce a plurality of identification items in the recording list file, and reproduce a stream file which corresponds to an identification information item selected from the identification information items.

The recording list editor 35c operates as follow, when the identification information items includes an irregular identification information item part of information of which lacks in comparison with the predetermined order. Specifically, the recording list editor 35c can newly generate identification information from the additional information of the third packet in a stream file which corresponds to the irregular identification information, and add the new identification information to the lacking identification information, or replace the irregular identification information with the new identification information.

FIG. 2 will be explained in more detail. FIG. 2 illustrates an example of configuration of files which are recorded and managed in a recording medium, that is, the HDD 57. In the present embodiment, FIG. 2 illustrates files which are particularly related to the apparatus. The files include stream files F1, F2, F3, and ..., and a recording list file 57b. The stream files F1 F2, F3, ..., are stored in a stream file directory 75a. On the other hand, the recording list file 75b is independent of the stream files F1, F2, F3, and ....

The recording list file 75b includes identification information items of the stream files F1, F2, F3, and ..., as a table. Identification information items of the stream files F1 F2, F3, and, ..., are prepared when the respective stream files are produced and recorded. The identification information item basically includes a file number, and a program name, broadcasting date, and details (comments) of content (program) included in the file.

The file number is prepared in the recording and reproduction signal processor 55 or the recording controller 35a when the stream file is recorded on the HDD 57. for example, successive file numbers are assigned to recorded files in the recording order of files.

On the other hand, information items such as program names, broadcasting dates, and details (comments) of contents (programs), by which the programs can be identified, are described in EIT (Event Information Table) and SIT (Selection Information Table) which are included in packet streams of the digital television broadcasting signal.

The EIT includes not only an EITp (program names, broadcasting dates, details (comments)) for programs which are currently being broadcasted, but also an EITf (program names, broadcasting dates, details (contents)) for next programs which follow the current programs being broadcasted. The EIT also includes an EITpf (program names, broadcasting dates, details (comments)) which is used when the programs are changed or finished (when the broadcasting time is extended or the program is urgently changed to a special program). The SIT includes a program name, broadcasting date, and details (comments) of the program stream in which the SIT is included.

When a program of the digital television broadcasting signal is received and recorded, the recording controller 35a receives a first packet which includes content of the selected program and second and third packets, where the second and third packets include additional information, and the recording controller 35a produces a first stream file which is obtained by collecting the first and the second packets. In this processing, the recording controller 35a also produces first identification information (program name, broadcasting date, and details (comments) of the program stream) to identify the first stream file from the additional information by use of information included in the third packet, for example. The produced identification information item is stored in the recording list file 57b, as illustrated in FIG. 2. In addition, the first stream file is stored in the stream file directory 57a.

There are cases where the identification information is lacking or missing, or not produced. Such cases includes the case where data is damaged due to any error which occurs when identification information is being produced, and the case where the broadcasting signal was originally disturbed by noise and identification information could not be obtained. In addition, there is the case where the input stream does not include EIT since the input stream is a copied or dubbed stream. There are also the case where the stream is input from a personal computer or the like, and the case where identification information could not be generated due to power failure or the like although the stream file was produced during the broadcasting program was being recorded.

In such cases, as illustrated in FIG. 2, the recording list file 57b only show a file number (for example. File No. 2?????) of the stream, and the identification information item serves as an irregular identification information item. In such cases, the user cannot understand the program name, the broadcasting date, or the details of the stream file F2, from the recording list file displayed as menu.

Therefore, the apparatus of the present embodiment is provided with the recording list editor 35c, which automatically edits an irregular identification item as described above into normal identification information.

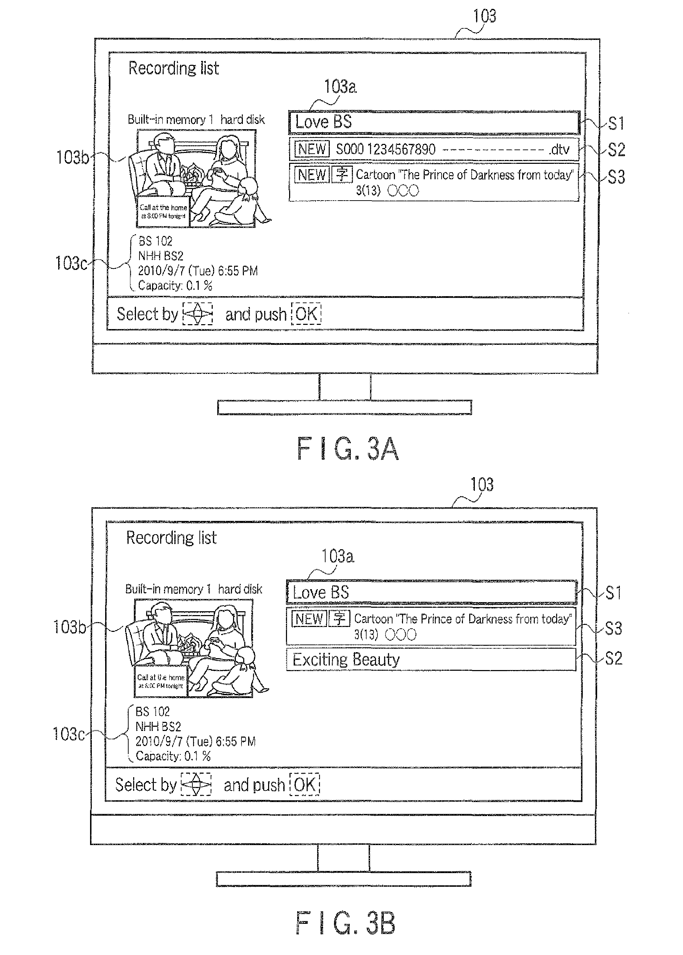

FIG. 3A illustrates an example in which the recording list is displayed on the display device 103. The display device 103 displays identification information items of the stream files F1(stream S1), F2(stream S2) and F3(stream S3). FIG. 3A illustrates a state where the identification information item of the stream file F1(steam S1) is designated by a cursor 103a (the example where the program name thereof is "Love BS"). In this state, moving images (FIG. 3A shows an example of moving images showing a call at the home) which are obtained by reproducing the stream S1 are displayed in a window 103b. In addition, under the window 103b, displayed are details 103c of the identification information, that is, the broadcasting type (B5, CS, or ground-wave digital broadcasting), the broadcasting station, and the broadcasting date.

In addition, the identification information item of the stream file F2(stream 51) is an irregular identification information item, and an example in which data of the recording date is displayed. The identification information item of the stream file F3(stream S3) is an example which is normally recorded.

FIG. 3B illustrates a state where the irregular identification information item relating to the stream file F2(stream S2) is changed by production to a normal identification information item (with the program name of "Exciting Beauty") by the recording list editor 35c of the present apparatus.

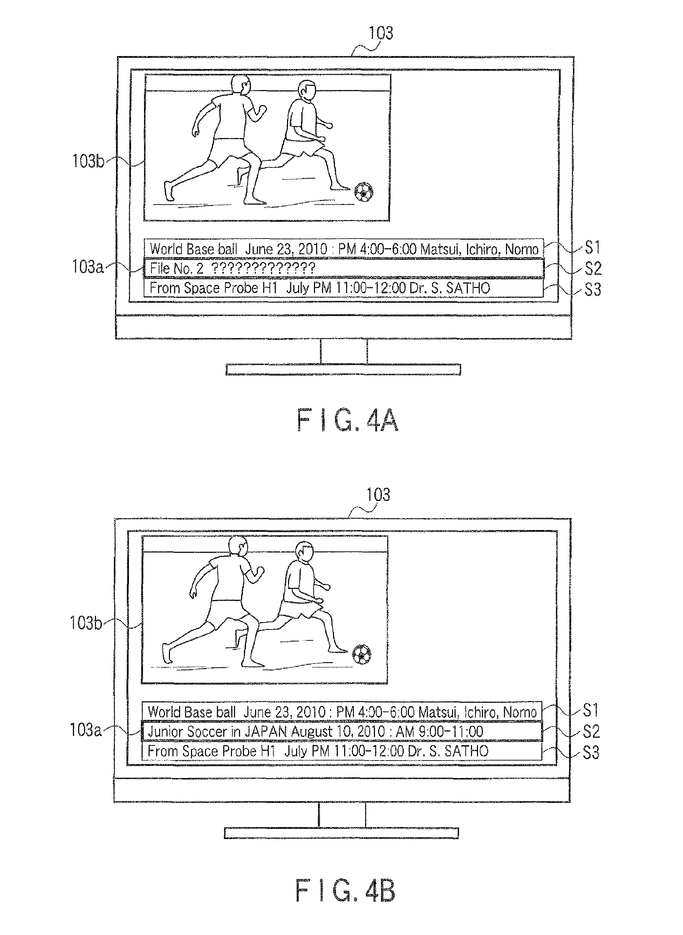

The above example is only an example. FIG. 4A and FIG. 4B also illustrate a state where an irregular identification information item is changed by production to a normal identification information item by the recording list editor 35c of the present apparatus.

FIG. 4A illustrates a state where the cursor 103a is positioned to an item of an identification information item (irregular identification information item) which corresponds to the stream file F2(stream S2). FIG. 4B illustrates a state where the irregular identification information item is changed by production to a normal identification information item (with the program name of "Junior Soccer in JAPAN...") by the recording list editor 35c of the present apparatus.

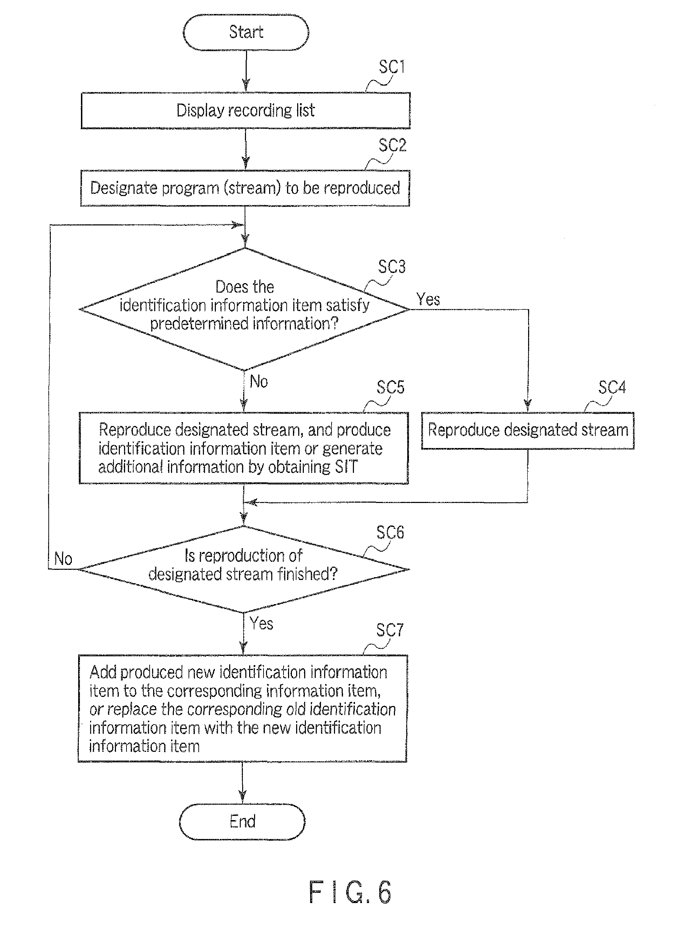

As described above, when there is an irregular identification information item as identification information item corresponding to a stream file, the irregular identification information item is changed to a normal identification information item by the recording list editor 35c. Detection of an irregular identification information item will be clarified by explanation of FIG. 6 described later. When there is an irregular identification information item, the recording list editor 35c uses SIT included in a stream which corresponds to the irregular identification information item. Since SIT includes the program name, the broadcasting date, and the details (comments) of the stream, the recording list editor 35c collects the program name, the broadcasting date, and the details (comments). Then, the recording list editor 35c generates additional information which the irregular identification information item lacks, or a new identification information item.

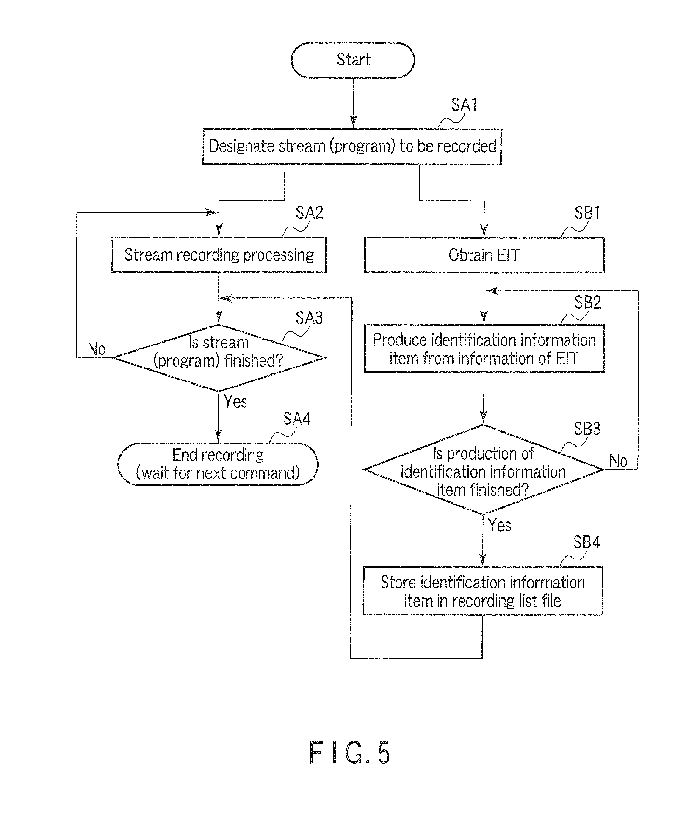

FIG. 5 is a flowchart illustrating operation of the apparatus performed when a desired program of the digital television broadcasting signal is viewed by the user, a stream of the program is stored on the HDD 57, and identification information of the stream is produced and stored.

First, a stream (program) to be recorded is designated (Step SA1). Then, recording processing of the stream of the program is executed (Step SA2). In this processing, a packet to obtain EXIT is extracted from the stream and the EIT is obtained (Step B1), and an identification information item is produced from information included in the EIT (Steps SB2 and SB3) . When production of the identification information item is finished, the identification information item is stored in the recording list file 57b (Step SB4), and the apparatus goes to Step SA3. At Step SA3, it is determined whether the stream of the program corresponding to the produced identification information item is finished or not. When the stream is finished, the recording operation is finished, and the apparatus comes into a state of waiting the next command (Step Spa4).

FIG. 6 is a flowchart illustrating operation performed after a request of displaying a recording list is issued. First, the recording list is displayed (Step SC1). The user moves the cursor by operating the remote controller, designates a stream to be reproduced with reference to the identification information, and push the OK button (Step SC2). Thereby, since link information of the stream corresponding to the designated identification information item is described, reproduction of the stream is started. In this processing, it is determined whether the identification information item is irregular or not (Step SC3). When the identification information item is a normal identification information item, reproduction of the designated stream is continued (Step SC4). When an irregular identification information item is detected at Step SC3, the designated stream is reproduced, and a packet which includes SIT included in the stream is obtained. Then, an identification information item is produced, or additional information which is missing in the irregular identification information item is generated.

Then, when reproduction of the designated stream is finished (Step SC6), missing information is added to the irregular identification information, or the irregular identification information is replaced with the new identification information item (Step SC7).

The embodiment of FIG. 6 shows operation performed when the identification information item of the designated stream itself to be reproduced is irregular. However, the present apparatus is not limited to the embodiment.

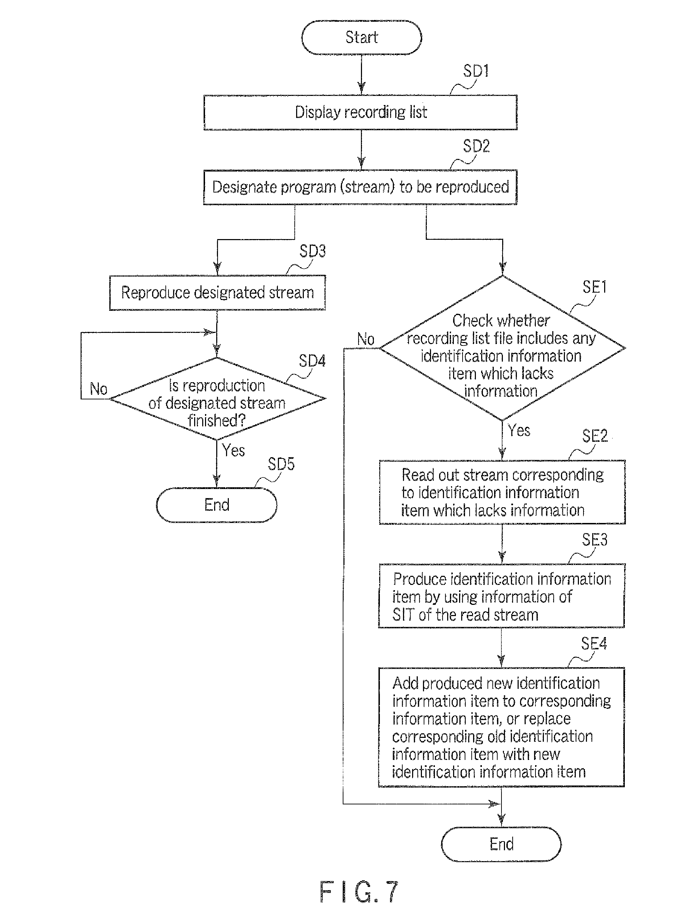

FIG. 7 illustrates an embodiment in which it is checked whether the recording list includes any irregular identification information item, when any one of recorded streams is designated to be reproduced. Then, missing information is automatically added to the irregular identification information item, or the irregular identification information item is replaced with a new identification information item. The embodiment edits any irregular identification item existing in the recording list, regardless of whether the identification information item corresponding to the stream to be reproduced is normal or not.

In FIG. 7, the recording list is displayed (Step SD1). Then, a stream to be reproduced in the recording list is designated (Step SD2). The designated stream is reproduced, and the operation is ended when reproduction of the stream is finished (Step SD3). On the other hand, when reproduction of the stream is started, the recording list is checked. Then, it is checked whether there is any irregular identification information item in the recording list (Step SE1). When there is any irregular identification information item, a stream which corresponds to the irregular identification information item is read out at high speed, and information of SIT which is included in the stream is obtained. Then, missing information which the irregular identification information lacks is produced, or a new identification information item is produced (Step SE3). Thereafter, the missing information is automatically added to the irregular identification information item, or the irregular identification information item is replaced with the new identification information item. This processing is performed independently of the program being displayed.

In addition, the embodiment may have a form in which the processing functions of Steps SE1 to SE4 of FIG. 7 are independently performed. Specifically, the recording list file may be checked, for example, after a program is recorded, or the recording list file may be automatically started up and checked at the time when program reproduction is not performed in the apparatus. The time when program reproduction is not performed may be the time when the apparatus is powered. In addition, the recording list may be checked before the recording list is displayed in FIG. 7, such that no irregular identification information item is displayed at the point in time when the recording list is displayed.

According to the above embodiment, even when there is any irregular identification information item when the recording list is displayed, the recording list is displayed next time in a state where the irregular identification information is changed to a normal identification information item.

Although the above embodiment is explained on the premise that some stream files and corresponding identification information items have already been stored in the recording medium, the embodiment is not limited to the above case. The present invention is also applicable to the case where a stream file is first produced.

The present invention is effectively applicable to video recording and reproduction apparatuses, digital television apparatuses and personal computers equipped with recording function.

## Claims

1. A stream file management apparatus **characterized by** comprising:
a stream file/identification information producer (35al) configured to receive packets including a program content and packets including additional information, produce a stream file assembled the packets and identification information with the additional information used for a menu to specify the stream file;
a recording controller (35a) configured to output the stream file and the identification information to a recording medium;
a reproducing controller (35b) configured to process the stream file and the identification information read from the recording medium;
an editor (35c) configured to generate new identification information from the additional information included in the packet of the read stream file, when the read identification information is irregular and different from a predetermined order; and
a display controller (35d) configured to obtain an output for the menu by using the identification information.

2. The stream file management apparatus of claim 1, **characterized in that** the editor (35c) automatically operates an editing when the identification information related to the stream file reproduced by the reproducing controller (35b) is irregular.

3. The stream file management apparatus of claim 1, **characterized in that** the editor (35c) automatically operates an editing when irregular identification information exists among a plurality of the identification information recorded on the recording medium.

4. The stream file management apparatus of claim or 2 or 3, **characterized in that** the additional information included in the packets is information included in a selection information table (SIT) of a digital television broadcasting signal.

5. The stream file management apparatus of claim or 2 or 3, **characterized in that** the display controller (35d) outputs the irregular identification information and normal and new identification information after the irregular identification information is edited.

6. The stream file management apparatus of claim 1 or 2 or 3, **characterized in that** the packets including the program content and the packets including the additional information are introduced from a tuner or an external input terminal.

7. A managing method of a stream file management apparatus which controls a stream file/identification information producer, a recording controller, and a reproducing controller, **characterized by** comprising:
receiving packets including a program content and packets including additional information by the stream file/identification information producer, producing a stream file assembled the packets and identification information with the additional information used for a menu to specify the stream file;
recording the stream file and the identification information on a recoding medium by the recording controller;
generating new identification information from the additional information included in the packet of the stream file, when the read identification information is irregular and different from a predetermined order; and
obtaining an output for the menu by reproducing the identification information of the recording medium by the reproducing controller.
